# EUROPÄISCHE PATENTSCHRIFT

(11) **EP 2 157 339 B1**
(45) Veröffentlichungstag und Bekanntmachung des Hinweises auf die Patenterteilung: **04.03.2015**
(21) Anmeldenummer: 09176872.1
(22) Anmeldetag: 22.09.2004
(51) Int. Cl.: F16J 15/08

(54) **Metallische Zylinderkopfdichtung ohne Distanzlage**
Metal cylinder head gasket without a spacing layer
Joint de culasse metallique sans couche de separation

(30) Priorität: 16.12.2003 DE 10358919
(43) Veröffentlichungstag der Anmeldung: 24.02.2010
(62) Teilanmeldung aus: 04786986.2
(73) Patentinhaber: Federal -Mogul Sealing Systems GmbH, 57562 Herdorf (DE)
(72) Erfinder: Schmitt, Klaus, 57520 Grünebach (DE); Flemming, Ralf, 57520 Langenbach (DE)
(74) Vertreter: Becker Kurig Straus

(56) Entgegenhaltungen:
- EP-A- 1 179 696
- EP-A- 1 308 653
- DE-A1- 10 029 352

## Beschreibung

Die vorliegende Erfindung betrifft eine metallische Zylinderkopfdichtung ohne Distanzlage. Insbesondere betrifft sie eine Zylinderkopfdichtung mit nur einer Funktionslage.

Eine Zylinderkopfdichtung stellt bei einem Verbrennungsmotor die Gasdichtigkeit zwischen Zylinderblock und Zylinderkopf sicher. Dabei muss die Zylinderkopfdichtung auftretende Schwingungen zwischen Zylinderkopf und Zylinderblock elastisch ausgleichen.

Das Funktionsprinzip von metallischen Flachdichtungen zur Verwendung als Zylinderkopfdichtung von Verbrennungsmotoren beruht darauf, dass eine elastische Dichtungszone vorhanden ist. Die Dichtung wird mit Sicken ausgebildet, die um den Bereich der Brennräume elastische Dichtungszonen bilden. Die Pressung der Sicken ändert sich im Betrieb des Motors aufgrund der verschiedenen Belastung ständig. Die Stärke der Materiallage sowie die jeweilige Formgebung der Sicken hat Einfluss auf die elastischen Eigenschaften der Sicken d.h. die Federkraft oder -steifigkeit. Die entsprechende Federkennlinie kann nur über enge Bereiche variiert werden. Der den Brennräumen direkt benachbarte Bereich einer solchen Flachdichtung ist während des Betriebs der Motors höheren Belastungen ausgesetzt als der Rest der Dichtungsfläche. Zur Sicherstellung einer genügenden Abdichtung in diesen exponierten Bereichen ist es erforderlich, hier eine hohe Flächenpressung aufzubringen. Dies wird für gewöhnlich durch eine Erhöhung der Materialstärke am Rande der Brennräume erreicht, und kann durch Umfalten einer Metalllage erfolgen oder durch die Verwendung zusätzlicher Auflagen, die mit einer Metalllage der Dichtung verbunden werden. Häufig wird diese Materialverdickung so angeordnet, dass die Sicken im eingebauten Zustand davor geschützt sind, durch den Druck vollständig abgeflacht zu werden.

Zylinderkopfdichtungen bestehen herkömmlicherweise aus mehreren Metalllagen und einer auch als Stopper bezeichneten Ringauflage. Zur Erhöhung der Pressung in den stark beanspruchten Bereichen um die Brennräume herum sind Sicken vorgesehen, die die Materialdicke erhöhen.

Die DE 101 01 604 A1 beschreibt eine Zylinderkopfdichtung mit zwei Dichtungslagen, einer Distanzlage und einer Ringauflage. Bei dieser Dichtung sind auf der dem Brennraum abgewandten Seite der Hauptsicken in den Dichtungslagen zusätzliche Abstützungssicken vorgesehen.

Die DE 100 29 352 A1 offenbart eine Flachdichtung, bei der ein Metallring über eine Schweißsicke mit einer Metalllage verschweißt ist, so dass Metallring und Metalllage in einem festen Abstand a gehalten werden. Während diese Dichtung durch die Verschweißüng eine gute Gasdichtigkeit besitzt, ist die Elastizität aufgrund der festen Verbindung und des festen Abstands reduziert.

Die DE 197 51 293 A1 beschreibt eine Flachdichtung, bei der der umgelegte Falz eine Pressungsbegrenzung für die Sicke darstellt. Er bildet dabei einen Bereich mit hoher Pressung. Hier liegt die Sicke aber im Kraftnebenschluss, so dass die maximale Pressung nicht im Bereich der Sicke, sondern im Bereich der Umfaltung auftritt. Bei Dieselmotoren hat sich dieses Dichtungsprinzip bewährt.

Bei Benzinmotoren von PKWs wird in der Regel eine abweichende Konstruktion verwendet, wobei auf eine Begrenzung der Pressung verzichtet wird. Die Brennräume werden hier nur von Sicken der Zylinderkopfdichtung umschlossen, die im eingebauten Zustand abgeflacht sind. Die Sicken liegen hier also im Krafthauptschluss und nehmen daher die maximale Pressung auf.

An dieser Stelle erfolgt bei Belastung, das heisst bei Druckbeaufschlagung durch den Verbrennungsvorgang im Brennraum, ein Abrollen mit großer Schwingungsamplitude. Bei einer herkömmlichen Dichtung kommt es daher zu starken vertikalen Schwingungen. Um dennoch eine ausreichende Gasdichtigkeit zu gewährleisten, wird eine hohe Pressung an der Sicke erzeugt. Wenn die im Krafthauptschluss liegende Sicke nicht zusätzlich abgestützt ist, und somit die gesamte Belastung erfährt, wird die Lebensdauer der Dichtung dadurch negativ beeinflusst.

In EP 0574166 B1 wird eine Kombination beider Konstruktionsformen offengelegt. Es wird eine Flachdichtung beschrieben, die eine Ringauflage umfasst, welche im eingebauten Zustand bis zu der Vollsicke der Dichtungslage reicht. Durch diese Anordnung liegt die Sicke im Krafthauptschluss. Diese Anordnung ist insbesondere für Motoren geeignet, bei denen die Stegbreiten zwischen einzelnen Brennräumen gering sind, und es wird eine Konzentration der maximalen Pressung auf den Randbereich um die Brennräume ermöglicht.

Diese Ringauflage folgt aber in ihrer Form dem Profil der Sicke, und reicht nicht über die Spitze der Sicke hinaus. Dadurch wird die Federkennlinie der Sicke insofern beeinflusst, dass die Sicke härter wird, also an Elastizität verliert. Im eingebauten Zustand herrscht im Bereich der Spitze der Sicke ausserdem eine extreme Pressungsspitze. Im Vergleich mit einer Biegebalkenkonstruktion stellt die Ringauflage also sozusagen den Auflagepunkt dar. Bei Druckbeaufschlagung kommt es als Ergebnis davon zu einem Abrolleffekt über die Sickenspitze, was zu hohen Schwingungsamplituden in vertikaler Richtung führt. Je nach Druck im Brennraum kann sich dieser Effekt noch verstärken.

Eine Ringauflage, auch als Stopper bezeichnet, dient dazu, im Bereich der Sicke die Materialdicke zu vergrößern und dadurch die Pressung an den am meisten belasteten Stellen der Dichtung zu erhöhen (EP-A-1 179 696).

Je mehr Lagen verwendet werden, desto aufwendiger und somit teurer wird die Herstellung einer entsprechenden Zylinderkopfdichtung. Die Anpassung unterschiedlicher Lagen aneinander, und die eventuell unterschiedlichen temperaturabhängigen Ausdehnungen bedeuten eine potenzielle Verschlechterung von Dichteigenschaften und Lebensdauer der entsprechenden Dichtung.

Daher ist es Aufgabe der vorliegenden Erfindung, eine Zylinderkopfdichtung bereitzustellen, bei der der Abrolleffekt verringert ist. Eine weitere Aufgabe ist es, eine Zylinderkopfdichtung bereitzustellen, die nur eine Funktionslage aufweist.

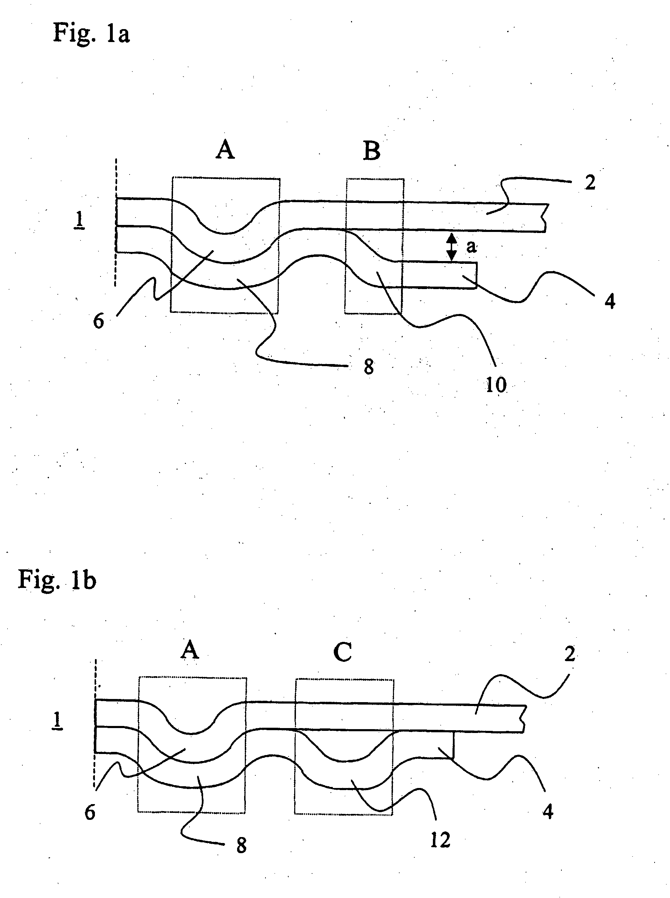

Gemäß z.B Figur 1 wird eine metallische Zylinderkopfdichtung mit mindestens einer Öffnung entsprechend einem Brennraum eines Verbrennungsmotors bereitgestellt. Die Dichtung umfasst eine Funktionslage und eine Ringauflage, wobei die Ringauflage um den Durchbruch herum angeordnet ist. Die Funktionslage weist eine Vollsicke auf. Die Ringauflage weist eine Vollsicke auf, in welcher die Vollsicke der Funktionslage aufliegt, sowie eine Sicke, die von dem Durchbruch für den Brennraum aus gesehen in radialer Richtung hinter der Vollsicke angeordnet ist. Diese zusätzliche Sicke nimmt einen Teil der Pressung auf, die im eingebauten Zustand der Zylinderkopfdichtung auftritt.

Es wird bevorzugt, dass die Sicke als eine Halbsicke ausgeführt ist. Dies kann gewünscht sein, um eine bestimmte Oberfläche in Kontakt mit der Sicke zu bringen. Ausserdem kann die Elastizität der Sicke durch die Ausbildung als Halbsicke, verglichen mit einer Vollsicke, angepasst werden.

Es wird bevorzugt, dass die Sicke als eine Vollsicke ausgeführt ist. Dadurch kann eine bestimmte Oberfläche mit der Sicke in Kontakt gebracht werden. Ausserdem kann die Elastizität der Sicke durch die Ausbildung als Vollsicke, verglichen mit einer Halbsicke, angepasst werden.

Es wird bevorzugt, dass sich die Ringauflage mindestens von einem Sickenfuß bis zum anderen Sickenfuß der Vollsicke erstreckt. Dadurch liegt die Vollsicke im Krafthauptschluss.

Gemäß der Erfindung wird eine metallische Zylinderkopfdichtung mit mindestens einem Durchbruch entsprechend einem Brennraum eines Verbrennungsmotors bereitgestellt. Die Dichtung umfasst eine obere Funktionslage, eine Ringauflage und eine untere Funktionslage. Die Ringauflage ist zwischen der oberen und der unteren Funktionslage und um den Durchbruch herum angeordnet. Die obere Funktionslage weist eine Vollsicke auf. Die untere Funktionslage weist eine Sicke auf, die von dem Durchbruch für den Brennraum aus gesehen in radialer Richtung hinter der Vollsicke angeordnet ist. Die zusätzliche Sicke nimmt einen Teil der Pressung auf, die im eingebauten Zustand der Zylinderkopfdichtung auftritt.

Es wird bevorzugt, dass die Sicke als Halbsicke ausgeführt ist. Die Vorteile dieser Ausführung wurden bereits vorher genannt.

Es wird bevorzugt, dass die Halbsicke nach oben gerichtet ausgebildet ist. Je nach Ausrichtung kann eine andere Oberfläche mit der entsprechenden Lage in Kontakt kommen. Dies kann die Eigenschaften der Dichtung in wünschenswerter Weise anpassen.

Es wird bevorzugt, dass die Halbsicke nach unten gerichtet ausgebildet ist.

Es wird bevorzugt, dass die Sicke als Vollsicke ausgeführt ist. Die Vorteile dieser Ausführung wurden bereits vorher genannt.

Es wird bevorzugt, dass die Vollsicke nach oben gerichtet ausgebildet ist.

Es wird bevorzugt, dass die Vollsicke nach unten gerichtet ausgebildet ist.

Es wird bevorzugt, dass sich die Ringauflage mindestens von dem einen Sickenfuß der Vollsicke bis zu dem anderen Sickenfuß der Vollsicke erstreckt. Dadurch liegt die Vollsicke im Krafthauptschluss.

Es wird bevorzugt, dass sich die Ringauflage mindestens von dem Sickenfuß der Völlsicke, der dem Brennraum am nächsten ist, bis zu dem Sickenfuß der Sicke, der dem Brennraum am nächsten ist, erstreckt. Dadurch wird eine höhere Steifigkeit der Dichtung erreicht, sowie die Pressung auf eine größere Fläche verteilt.

Bei der vorliegenden Erfindung ist in radialer Richtung hinter dem Brennraum eine zusätzliche Sicke vorgesehen. Diese Sicke, die als Halb- oder als Vollsicke ausgeführt werden kann, nimmt einen Teil der Pressung auf. Da somit die dem Brennraum am nächsten liegende Sicke nicht mehr die gesamte Belastung aufnehmen muss, kann die Sickenspitze bzw. Kontaktspitze in der Pressung optimiert werden. Ebenso übernimmt die zweite Sicke eine zusätzliche Dichtfunktion. Diese Eigenschaften verbessern die Dichteigenschaften und haben einen positiven Einfluss auf die Lebensdauer der Zylinderkopfdichtung.

### Kurze Beschreibung der Zeichnung

FIGN. 1a und 1b stellen zwei Zylinderkopfdichtung mit einer Funktionslage in einer Querschnittsansicht dar.
FIGN. 2a und 2b stellen bevorzugte Ausführungsformen der erfindungsgemäßen mehrlagigen Zylinderkopfdichtung in einer Querschnittsansicht dar.
FIGN. 3a und 3b stellen weitere bevorzugte Ausführungsformen der erfindungsgemäßen mehrlagigen Zylinderkopfdichtung in einer Querschnittsansicht dar.

Auf der linken Seite jeder Figur befindet sich der dem Brennraum benachbarte Bereich der Zylinderkopfdichtung, während sich auf der rechten Seite jeder Figur die dem Brennraum abgewandte Seite davon befindet.

Die Sicke liegt dabei auf der Ringauflage bzw. dem Stopper auf. Dieses Prinzip wird daher auch als "Sicke auf Stopper" bezeichnet.

In Fig. 1a ist eine Zylinderkopfdichtung gezeigt, die eine Funktionslage 2 und eine Ringeinlage 4 umfasst. Die Funktionslage 2 weist eine Vollsicke 6 auf. Die Ringeinlage 4 weist eine Vollsicke 8 auf, in der die Vollsicke 6 aufliegt, und eine vom Brennraum aus gesehen in radialer Richtung dahinter liegende Halbsicke 10. In dem mit A bezeichneten Bereich, in dem die Vollsicke 6 der Funktionslage 2 auf der Ringeinlage 4 aufliegt, tritt im eingebauten Zustand die größte Pressung auf.' Ein Teil des auftretenden Drucks wird im mit B bezeichneten Bereich durch die Halbsicke 10 der Ringeinlage 4 aufgenommen, wodurch die Vollsicke 6 entlastet wird. Dadurch wird also eine zusätzliche Abstützung erzeugt. Die Vollsicke 6 der Funktionslage liegt auf der Ringauflage auf und liegt somit im Krafthauptschluss. Der Auflagepunkt der Vollsicke 6 ist also sozusagen der Auflagepunkt einer Biegebalkenkonstruktion.

In Fig. 1b ist eine Modifikation der Zylinderkopfdichtung von Fig. 1a dargestellt. Statt der Halbsicke 10 ist hier jedoch eine weitere Vollsicke 12 ausgebildet. Im Vergleich zu der in Figur 1a gezeigten Situation wird hier ein Teil des Drucks im Bereich C von der zusätzlichen Sicke aufgenommen. Die Ausgestaltung der zusätzlichen Sicke als Vollsicke 12 wie hier gezeigt oder als Halbsicke 10 wie in Fig. 1a ermöglicht eine Einstellung der elastischen Eigenschaften der erfindungsgemäßen Zylinderkopfdichtung im Bereich der zusätzlichen Sicke. Dadurch kann ebenfalls beeinflusst werden, auf welcher Oberfläche die Ringauflage hinter diesem Bereich direkt aufliegt. Das sind hier entweder die Funktionslage oder wie in Fig. 1a die Oberseite des Zylinderblocks (nicht gezeigt).

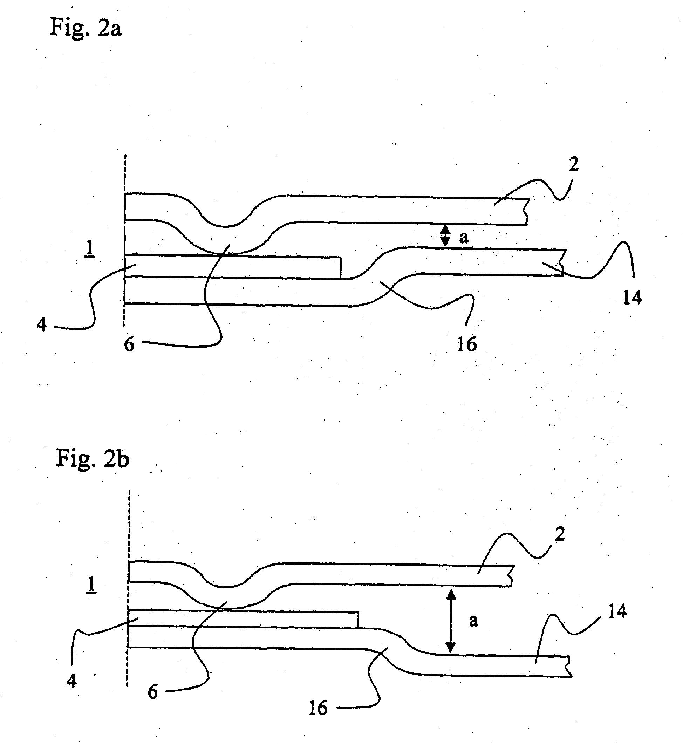

In Fig. 2a ist eine mehrlagige Zylinderkopfdichtung gezeigt, die eine obere Funktionslage 2, eine Ringauflage 4 und eine untere Funktionslage 14 umfasst. Die obere Funktionslage 2 weist eine Vollsicke 6 auf, die auf der Ringauflage 4 aufliegt. Die untere Funktionslage 14 weist eine vom Brennraum aus gesehen in radialer Richtung dahinter liegende Halbsicke 16 auf. Die Halbsicke 16 ist nach oben gerichtet ausgebildet. Die Ringauflage 4 erstreckt sich hier von dem Sickenfuß der Vollsicke 6, der dem Brennraum am nächsten ist, bis zum Sickenfuß der Halbsicke 16, die dem Brennraum am nächsten ist (in der Figur jeweils auf der linken Seite).

Fig. 2b stellt eine Modifikation der Zylinderkopfdichtung aus Fig. 2a dar, bei der die Halbsicke 16 der unteren Funktionslage 14 nach unten gerichtet ist.

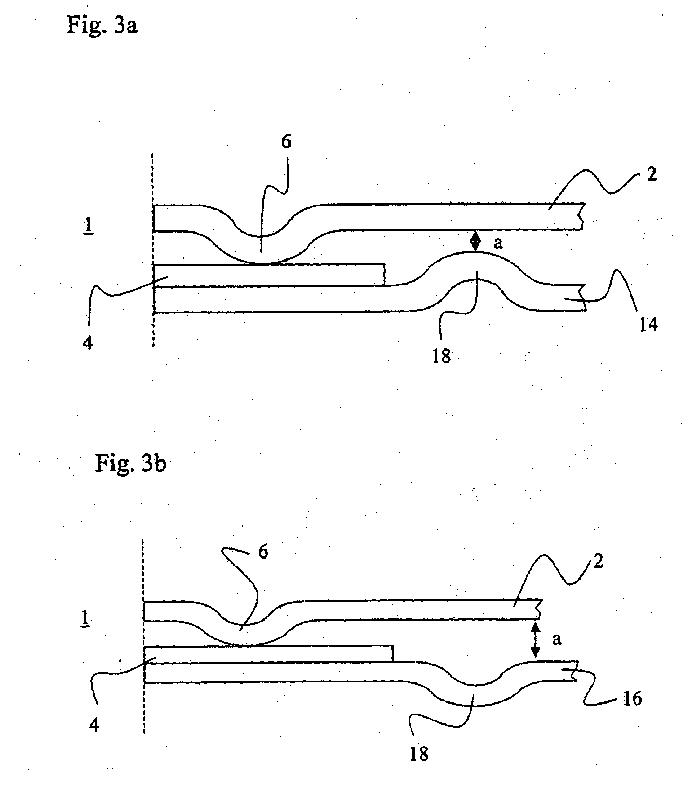

Fign. 3a und 3b stellen jeweils Ausführungsformen der erfindungsgemäßen mehrlagigen Zylinderkopfdichtung dar. Im Gegensatz zu den Fign. 2a und 2b weist die untere Funktionslage 14 hier statt einer Halb- eine Vollsicke 18 auf. Fig. 3a zeigt eine Ausführungsform, bei der die Vollsicke 18 nach oben gerichtet ist, und Fig. 3b eine weitere Ausführungsform, bei der die Vollsicke 18 nach unten gerichtet ausgebildet ist.

## Patentansprüche

1. Metallische Zylinderkopfdichtung mit mindestens einer Öffnung entsprechend einem Brennraum (1) eines Verbrennungsmotors, umfassend eine obere Funktionslage (2), eine Ringauflage (4) und eine untere Funktionslage (14), wobei die Ringauflage (4) zwischen oberer Funktionslage (2) und unterer Funktionslage (14) angeordnet ist und an die untere Funktionslage (14) angrenzt, wobei die obere Funktionslage (2) eine Vollsicke (6) aufweist, die an die Ringauflage (4) angrenzt, und wobei die untere Funktionslage (14) eine Sicke (16, 18) aufweist, die auf der vom Brennraum (1) abgewandten Seite der Vollsicke (6) angeordnet ist, **dadurch gekennzeichnet, dass** die untere Funktionslage (14) auf der vom Brennraum (1) abgewandten Seite der Vollsicke (6) einen Abstand a von der oberen Funktionslage (2) hat.

2. Zylinderkopfdichtung gemäß Anspruch 1, wobei die Sicke (16) in der unteren Funktionslage (14) als Halbsicke ausgeführt ist.

3. Zylinderkopfdichtung gemäß Anspruch 2, wobei die Halbsicke (16) in der unteren Funktionslage (14) so ausgebildet ist, dass die untere Funktionslage (14) auf der vom Brennraum (1) abgewandten Seite der Halbsicke (16) auf einem höheren Niveau liegt als auf der dem Brennraum (1) zugewandten Seite.

4. Zylinderkopfdichtung gemäß Anspruch 2, wobei die Halbsicke (16) in der unteren Funktionslage (14) so ausgebildet ist, dass sie die Höhe der Ringauflage (4) ausgleicht.

5. Zylinderkopfdichtung gemäß Anspruch 2, wobei die Halbsicke (16) in der unteren Funktionslage (14) so ausgebildet ist, dass die untere Funktionslage (14) auf der vom Brennraum (1) abgewandten Seite der Halbsicke (16) auf einem niedrigeren Niveau liegt als auf der dem Brennraum (1) zugewandten Seite.

6. Zylinderkopfdichtung gemäß einem der Ansprüche 2 bis 5, wobei sich die Ringauflage (4) vom dem Brennraum (1) zugewandten Sickenfuß der Vollsicke (6) bis zum dem Brennraum (1) zugewandten Sickenfuß der Sicke (16, 18) in der unteren Funktionslage (14) oder bis über den von dem Brennraum (1) zugewandten Sickenfuß der Sicke (16, 18) in der unteren Funktionslage (14) hinaus oder bis zu dem von dem Brennraum (1) abgewandten Sickenfuß der Sicke (16, 18) in der unteren Funktionslage (14) erstreckt.

7. Zylinderkopfdichtung gemäß Anspruch 1, wobei die Sicke (18) in der unteren Funktionslage (14) als Vollsicke ausgeführt ist.

8. Zylinderkopfdichtung gemäß Anspruch 7, wobei die Vollsicke (18) in der unteren Funktionslage (14) so ausgebildet ist, dass die untere Funktionslage (14) auf der vom Brennraum (1) abgewandten Seite der Vollsicke (18) in der unteren Funktionslage (14) auf dem gleichen Niveau liegt wie auf der dem Brennraum (1) zugewandten Seite.

9. Zylinderkopfdichtung gemäß Anspruch 7, wobei die Vollsicke (18) in der unteren Funktionslage (14) so ausgebildet ist, dass die untere Funktionslage (14) auf der vom Brennraum (1) abgewandten Seite der Vollsicke (18) in der unteren Funktionslage (14) auf einem höheren Niveau liegt als auf der dem Brennraum (1) zugewandten Seite.

10. Zylinderkopfdichtung gemäß Anspruch 7, wobei die Vollsicke (18) in der unteren Funktionslage (14) so ausgebildet ist, dass die untere Funktionslage (14) auf der vom Brennraum (1) abgewandten Seite der Vollsicke (18) in der unteren Funktionslage (14) auf einem niedrigeren Niveau liegt als auf der dem Brennraum (1) zugewandten Seite.

11. Zylinderkopfdichtung gemäß einem der Ansprüche 7 bis 10, wobei die Sickenspitze der Vollsicke (18) in der unteren Funktionslage (14) nach unten gerichtet ist.

12. Zylinderkopfdichtung gemäß einem der Ansprüche 7 bis 10, wobei die Sickenspitze der Vollsicke (18) in der unteren Funktionslage (14) nach oben gerichtet ist.

13. Zylinderkopfdichtung gemäß einem der Ansprüche 1 bis 12, wobei sich die Ringauflage (4) mindestens von dem einen Sickenfuß bis zu dem anderen Sickenfuß der Vollsicke (6) erstreckt.

## Claims

1. Metallic cylinder head gasket having at least one opening corresponding to a combustion chamber (1) of an internal combustion engine, comprising an upper functional layer (2), a support ring (4) and a lower functional layer (14), wherein the support ring (4) is arranged between the upper functional layer (2) and the lower functional layer (14) and is adjacent to the lower functional layer (14), wherein the upper functional layer (2) comprises a full bead (6) that is adjacent to the support ring (4), and wherein the lower functional layer (14) comprises a bead (16, 18) that is arranged on the side of the full bead (6) facing away from the combustion chamber (1), **characterized in that** the lower functional layer (14) on the side of the full bead (6) facing away from the combustion chamber (1) is at a distance a from the upper functional layer (2).

2. Cylinder head gasket according to claim 1, wherein the bead (16) in the lower functional layer (14) is formed as a half bead.

3. Cylinder head gasket according to claim 2, wherein the half bead (16) in the lower functional layer (14) is formed so that the lower functional layer (14) on the side of the half bead (16) facing away from the combustion chamber (1) lies on a higher level than on the side facing towards the combustion chamber (1).

4. Cylinder head gasket according to claim 2, wherein the half bead (16) in the lower functional layer (14) is formed so that it compensates the height of the support ring (4).

5. Cylinder head gasket according to claim 2, wherein the half bead (16) in the lower functional layer (14) is formed so that the lower functional layer (14) on the side of the half bead (16) facing away from the combustion chamber (1) lies on a lower level than on the side facing towards the combustion chamber (1).

6. Cylinder head gasket according to one of claims 2 to 5, wherein the support ring (4) extends from the bead foot of the full bead (6) facing towards the combustion chamber (1) up to the bead foot of the bead (16, 18) in the lower functional layer (14) facing towards the combustion chamber (1), or beyond the bead foot of the bead (16, 18) in the lower functional layer (14) facing towards the combustion chamber (1), or up to the bead foot of the bead (16, 18) in the lower functional layer (14) facing away from the combustion chamber (1).

7. Cylinder head gasket according to claim 1, wherein the bead (18) in the lower functional layer (14) is formed as a full bead.

8. Cylinder head gasket according to claim 7, wherein the full bead (18) in the lower functional layer (14) is formed so that the lower functional layer (14) on the side of the full bead (18) in the lower functional layer (14) facing away from the combustion chamber (1) lies on the same level than on the side facing towards the combustion chamber (1).

9. Cylinder head gasket according to claim 7, wherein the full bead (18) in the lower functional layer (14) is formed so that the lower functional layer (14) on the side of the full bead (18) in the lower functional layer (14) facing away from the combustion chamber (1) lies on a higher level than on the side facing towards the combustion chamber (1).

10. Cylinder head gasket according to claim 7, wherein the full bead (18) in the lower functional layer (14) is formed so that the lower functional layer (14) on the side of the full bead (18) in the lower functional layer (14) facing away from the combustion chamber (1) lies on a lower level than on the side facing towards the combustion chamber (1).

11. Cylinder head gasket according to one of claims 7 to 10, wherein the bead tip of the full bead (18) in the lower functional layer (14) is directed downwards.

12. Cylinder head gasket according to one of claims 7 to 10, wherein the bead tip of the full bead (18) in the lower functional layer (14) is directed upwards.

13. Cylinder head gasket according to one of claims 1 to 12, wherein the support ring (4) extends at least from one bead foot up to the other bead foot of the full bead (6).

## Revendications

1. Joint de culasse métallique comportant au moins une ouverture correspondant à une chambre de combustion (1) d'un moteur à combustion interne, comprenant une couche fonctionnelle supérieure (2), un appui annulaire (4) et un couche fonctionnelle inférieure (14), dans lequel l'appui annulaire (4) est disposé entre une couche fonctionnelle supérieure (2) et une couche fonctionnelle inférieure (14) et est contigu à la couche fonctionnelle inférieure (14), dans lequel la couche fonctionnelle supérieure (2) présente une moulure pleine (6), qui est contiguë à l'appui annulaire (4) et dans lequel la couche fonctionnelle inférieure (14) présente une moulure (16, 18), qui est disposé sur le côté de la moulure pleine (6) qui se détourne de la chambre de combustion (1), **caractérisé en ce que** la couche fonctionnelle inférieure (14) sur le côté de la moulure pleine (6) qui se détourne de la chambre de combustion (1) possède un espacement a par rapport à la couche fonctionnelle supérieure (2).

2. Joint de culasse selon la revendication 1, dans lequel la moulure (16) est conçue comme une demie moulure dans à couche fonctionnelle inférieure (14).

3. Joint de culasse selon la revendication 2, dans lequel la demie moulure (16) dans la couche fonctionnelle inférieure (14) est conçue de telle sorte que la couche fonctionnelle inférieure (14) sur le côté de la demie moulure (16) qui se détourne de la chambre de combustion (1) se situe à un niveau plus haut que sur le côté tourné vers la chambre de combustion (1).

4. Joint de culasse selon la revendication 2, dans lequel la demie moulure (16) est conçu dans la couche fonctionnelle inférieure (14) de telle sorte qu'il égalise à hauteur de l'appui annulaire (4).

5. Joint de culasse selon la revendication 2, dans lequel la demie moulure (16) est conçu dans la couche fonctionnelle inférieure (14) de telle sorte que la couche fonctionnelle inférieure (14) sur le côté de la demie moulure (16) qui se détourne de la chambre de combustion (1) se situe à un niveau plus bas que sur le côté tourné vers la chambre de combustion (1).

6. Joint de culasse selon une des revendications 2 à 5, dans lequel l'appui annulaire (4) s'étend à partir du pied de moulure de la moulure pleine (6) tourné vers la chambre de combustion (1) jusqu'au pied de moulure de la moulure (16,18) tourné vers la chambre de combustion (1) dans la couche fonctionnelle inférieure (14) ou jusqu'au-dessus du pied de moulure de la moulure (16,18) tourné vers la chambre de combustion (1) dans la couche fonctionnelle inférieure (14) ou jusqu'au pied de moulure de la moulure (16,18) qui se détourne de la chambre de combustion (1) dans la couche fonctionne inférieure (14).

7. Joint de culasse selon la revendication 1, dans lequel la moulure (18) est conçue dans la couche fonctionne inférieure (14) comme une moulure pleine.

8. Joint de culasse selon la revendication 7, dans lequel la moulure pleine (18) est conçu dans la couche fonctionnelle inférieure (14), de telle sorte que la couche fonctionnelle inférieure (14) sur le côté de la moulure pleine (18) qui se détourne de la chambre de combustion (1) dans la couche fonctionnelle inférieure (14) se situe au même niveau que sur le côté tourné vers la chambre de combustion (1).

9. Joint de culasse selon la revendication 7, dans lequel la moulure pleine (18) est conçu dans la couche fonctionnelle inférieure (14) de telle sorte que la couche fonctionne inférieure (14) sur le côté de la moulure pleine (18) qui se détourne de la chambre de combustion (1) dans la couche fonctionne inférieure (14) est situé à un niveau plus haut que le côté tourné vers la chambre de combustion (1).

10. Joint de culasse selon la revendication 7, dans lequel la moulure pleine (18) dans la couche fonctionnelle inférieure (14) est conçue de telle sorte que la couche fonctionne inférieure (14) sur le côté de la moulure pleine (18) qui se détourne de la chambre de combustion (1) dans la couche fonctionne inférieure (14) est situé à un niveau plus bas que le côté tourné vers la chambre de combustion (1).

11. Joint de culasse selon une des revendications 7 à 10, dans lequel la pointe de moulure de la moulure pleine (18) est orientée vers la bas dans la couche fonctionne inférieure (14).

12. Joint de culasse selon une des revendications 7 à 10, dans lequel la pointe de moulure de la moulure pleine (18) est orientée vers le haut dans la couche fonctionnelle inférieure (14).

13. Joint de culasse selon une des revendications 1 à 12, dans lequel l'appui annulaire (4) s'étend au moins à partir d'un des pieds de moulure jusqu'à l'autre pied de moulure de la moulure pleine (6).
